(19) Europäisches Patentamt
European Patent Office
Office européen des brevets

(11) Veröffentlichungsnummer: **0 542 022 B1**

(12) # EUROPÄISCHE PATENTSCHRIFT

(45) Veröffentlichungstag der Patentschrift: **02.08.95**

(51) Int. Cl.[6]: **C09K 21/00**, B32B 17/06, E06B 3/66, E04B 1/94, C03C 27/12

(21) Anmeldenummer: **92118303.4**

(22) Anmeldetag: **27.10.92**

(54) **Modifizierte, transparente, wässrige Alkalisilicat-Lösung, Verfahren zu deren Herstellung und deren Verwendung zur Herstellung von transparenten Hydrogelen.**

(30) Priorität: **15.11.91 DE 4137593**

(43) Veröffentlichungstag der Anmeldung:
**19.05.93 Patentblatt 93/20**

(45) Bekanntmachung des Hinweises auf die Patenterteilung:
**02.08.95 Patentblatt 95/31**

(84) Benannte Vertragsstaaten:
**AT BE CH DE FR IT LI**

(56) Entgegenhaltungen:
**EP-A- 0 100 001**
**DE-A- 3 506 132**
**DE-A- 3 506 134**
**GB-A- 2 210 034**

**PATENT ABSTRACTS OF JAPAN, unexamined applications, C Field, Band 16, Nr. 29, 24. Januar 1992, THE PATENT OFFICE JAPANESE GOVERNMENT, Seite 148 C 904, Nr. 3-242359**

(73) Patentinhaber: **FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder: **Birkhahn, Michael, Dr.**
**Stifterstrasse 16**
**W-8707 Veitshöchheim (DE)**

(74) Vertreter: **Fuhlendorf, Jörn, Dipl.-Ing. et al**
**Patentanwälte**
**Dreiss, Hosenthien & Fuhlendorf**
**Gerokstrasse 6**
**D-70188 Stuttgart (DE)**

EP 0 542 022 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung bezieht sich auf eine modifizierte, transparente, mehr oder minder viskose, wässrige Alkalisilicat-Lösung, auf ein Verfahren zu deren Herstellung und auf deren Verwendung zur Herstellung von transparenten Hydrogelen. Die erfindungsgemäße Alkalisilicat-Lösung kann außerdem zu transparenten Formkörpern, Folien oder Fasern verarbeitet werden, das transparente Hydrogel findet u.a. Verwendung als Festkörperbrandschutzmasse zur Herstellung von Brandschutzgläzern und Brandschutzbauelementen.

Festkörperbrandschutzmassen für die unterschiedlichsten Anwendungsfälle verfolgen alle den gemeinsamen Zweck, im Brandfall bsw. unter Hitzeeinwirkung die Ausbreitung der Wärmestrahlung bzw. des Feuers zu verhindern oder zu verzögern. Dies wird in der Regel durch wasserhaltige Substanzen erreicht, wobei im Brandfall bzw. unter Hitzeeinwirkung zunächst erhebliche Energiemengen der auftreffenden Hitze für die Verdampfung des Wassers absorbiert werden, und nach dem Verdampfen des Wassers aus dem festen, nicht brennbaren Rückstand auf dem zu schützenden Körper ein Hitzeschild gebildet wird, der die Ausbreitung der Wärmestrahlung verhindert oder verzögert. Hieraus ergibt sich die Notwendigkeit, daß Festkörperbrandschutzmassen einen möglichst hohen Wassergehalt und einen hinreichend hohen Feststoffgehalt aufweisen müssen, damit nach der Verdampfung des Wassers genügend Material verbleibt, um den zu schützenden Körper im Brandfall mit einem geschlossenen und möglichst wirksamen Hitzeschild bedecken zu können. Festkörperbrandschutzmassen für Verglasungen sollen außerdem transparent und lichtdurchlässig sein.

Aus der DE 3227057 C1 ist ein Verfahren zur Herstellung von lichtdurchlässigen, festen Brandschutzschichten aus einem blähbaren Material auf der Basis von hydratisierten Alkalisilicaten bekannt. Mit diesem Verfahren entstehen glasartige Schichten mit ca. 30 % Restwasser-Gehalt. Im Brandfall wird das Wasser frei, es verkocht, das zurückbleibende Material bläht sich auf und es entsteht ein hochporöser Schaum. Nachteil dieses Verfahrens ist die Tatsache, daß in den resultierenden, glasartigen Brandschutz-Schichten Mikrobläschen entstehen, die die optische Transparenz vermindern, sodaß die nach diesem Verfahren hergestellten Massen für Verglasungen nur in dünnen Schichten anwendbar sind, um die optische Transparenz nicht all zu stark zu beeinträchtigen. Dünne Brandschutz-Schichten gewähren aber im Brandfall einen geringeren Schutz, sodaß für einen ausreichenden Brandschutz Multi-Layer-Systeme erforderlich sind, die nach einem technisch sehr aufwendigen Verfahren hergestellt werden. Ferner wirken sich die Mikrobläschen bei dickeren Verbunden sehr störend aus, die Lichtdurchlässigkeit nimmt ab. So haben z.B. die mit dieser Brandschutzmasse gefertigten F 90-Gläser eine Dicke von ca. 74 mm und eine Lichtdurchlässigkeit von nur 58 %.

Aus der DE 3729867 C1 ist ein Verfahren zur Herstellung von im Brandfall aufschäumenden Brandschutzmassen auf der Basis von Aluminiumdihydrogenphosphat bekannt, welche für feuerabschirmende Verglasungen vorgesehen sind. Der in den resultierenden Brandschutzmassen enthaltene Restwassergehalt und die damit auftretenden Mikrobläschen erlauben aber ebenfalls nur die Herstellung von dünnen Schichten.

Aus der DE 3506132 A1 und DE 3506134 A1 sind lichtdurchlässige Festkörperbrandschutzmassen bekannt, die auch in Verglasungen eingesetzt werden können. Diese Festkörperbrandschutzmassen bestehen im wesentlichen aus Wasserglas-Lösungen, die als Geliermittel eine Säure enthalten. Dies hat zur Folge, daß das resultierende Hydrogel ebenfalls sauer ist. Hydrogele mit $SiO_2$-Gehalten unter 5 Gew.-% weisen aber nur eine geringe Eigenfestigkeit auf, während saure Hydrogele mit hohen $SiO_2$-Gehalten den Effekt der Synärese zeigen, d.h. das Gel schrumpft, und das Wasser scheidet sich als flüssige Phase ab. In einer optimierten Ausführungsform wird ein Feststoffgehalt des Gels von nur etwa 16 Gew.-% erreicht; dies ist für den Einsatz in F-Verglasungen zu wenig, da im Brandfall nach Verkochen des Wassers nicht genügend Material zurück bleibt, um einen zusammenhängenden Hitzeschild auf der gesamten Scheibenfläche zu bilden.

Aus der DE 3530968 C2 sind feuerwiderstandsfähige Verglasungen aus zwei auf Abstand gehaltenen Glasscheiben bekannt, deren Zwischenraum mit einem Hydrogel auf der Basis von polymerisierbaren Acrylsäurederivaten gefüllt ist.

Zur Zeit sind zwei behördlich zugelassene Systeme von F-Verglasungen kommerziell erwerbbar. Das System PYROSTOP der Flachglas AG, dem die DE 3227057 C1 zugrunde liegt, und das System CONTRAFLAM der Firma Vegla, das auf der DE 3530968 C2 basiert.

Die Anforderungen an Brandschutzgläser der F-Klasse sind in der DIN 4102, Teil 2, festgelegt. Brandschutzgläser für die F-Klasse sollen nicht nur vor Flammen und Rauch schützen, sondern sie sollen darüber hinaus wie eine Brandschutzwand eine sichere Abschirmung gegen die Übertragung von Hitzestrahlen bieten. Diese Anforderung nach thermischer Isolierung gilt dann als erfüllt, wenn sich die dem Feuer abgekehrte Oberfläche des Glasses im Mittel um nicht mehr als 140 K und an keiner Stelle um mehr

als 180 K über die Anfangstemperatur hinaus erwärmt, wobei F 90-Scheiben Feuerwiderstandszeiten von mindestens 90 Minuten aufweisen müssen und F 30-Scheiben von mindestens 30 Minuten.

Zur Herstellung von PYROSTOP wird eine Natronwasserglaslösung auf eine waagerecht liegende, 3 mm dicke Floatglas-Scheibe gegossen und einem definfierten Trocknungsprozeß unterworfen. Es verbleibt eine ca. 1 mm dicke, glasartig feste und transparente Natriumsilicat-Schicht mit einem Wasseranteil von ca. 30 %. Dann wird eine zweite Glasscheibe aufgelegt und durch kurzzeitiges Erwärmen ein Verbund Scheibe-Schicht-Scheibe erhalten. Als F 30-Scheiben sind Elemente mit einer Dicke von 15 mm und einer Lichtdurchlässigkeit von 84 % (vier Scheiben mit drei Zwischenschichten) erhältlich, während F 90-Scheiben ca. 74 mm Gesamtdicke und nur 58 % Lichtdurchlässigkeit aufweisen.

Im Brandfall zerspringt zunächst die dem Feuer zugewandte Seite, und das in der ersten Schicht vorhandene Wasser verdampft. Dabei bläht sich die Schicht zu einem festen Schaum auf, der die Scheibe noch zusammenhält und aufgrund seiner porösen Struktur den Durchtritt der Wärmestrahlung verhindert. Die weiteren Schichten schäumen dann nacheinander ebenfalls auf.

Der Aufbau von CONTRAFLAM-Scheiben ist dem eines herkömmlichen Isolierglases ähnlich. Zwei Scheiben Sekurit-Einscheibensicherheitsglas (5 mm Dicke) werden durch einen Abstandshalter und ein Dichtstoffsystem miteinander verbunden. Der Scheibenzwischenraum wird mit einer wässrigen Lösung gefüllt, die ca. 10 % Acrylamid, ca. 20 % anorganische Salze und ca. 1 % Persulfat enthält. Das Persulfat katalysiert die Polymerisation des Acrylamids zu einem lichtdurchlässigen Polyacrylamid-Gel.

Im Brandfall löst sich das Gel von der feuerseitigen Scheibe, die nach ca. 3 Minuten zerplatzt. Das im Gel vorhandene Wasser beginnt kontinuierlich zu verdampfen, wobei das Gel formstabil auf der gesamten Fläche steht und sich sein vorher gelöster Feststoffanteil in einen festen Hitzeschild umwandelt. Als F 30-Scheiben sind Systeme mit einer Dicke von 22 bzw. 25 mm (je eine Gel-Schicht von 12 bzw. 15 mm) mit einer Lichtdurchlässigkeit von 86 % erhältlich, während F 90-Scheiben 60 mm Gesamtdicke mit einer 50 mm dicken Gel-Schicht bei 84 % Lichtdurchlässigkeit aufweisen.

Sowohl bei PYROSTOP- als auch bei CONTRAFLAM-Scheiben wird vorausgesetzt, daß die Systeme bei Temperaturen nicht unter - 15 °C und nicht über + 60 °C eingesetzt werden. Sie sind somit als Einfachverglasungen nur für den Innenbereich verwendbar. Für den Einsatz in Außenverglasungen ist deshalb eine Kombination mit Isolierglas erforderlich.

Aufgabe der vorliegenden Erfindung ist es deshalb, ein Material bereit zu stellen, das zu hochtransparenten Brandschutzmassen mit gleichzeitig hohen Feststoffgehalten verarbeitet werden kann. Das Material soll gießbar sein und es soll nahe Raumtemperatur ohne Volumenschrumpfung aushärten. Die Durchlässigkeit der resultierenden Brandschutzmasse für sichtbares Licht soll im Bereich zwischen - 20 und + 100 °C mindestens 80 %, bei Schichtdicken von 10 bis 20 mm, betragen. Die resultierenden Brandschutzmassen sollen deshalb hochtransparent sein, damit sie bei Verglasungen auch in höheren Schichtdicken eingesetzt werden können, ohne daß dadurch deren optische Transparenz merklich beeinträchtigt wird. Die resultierenden Brandschutzmassen sollen in hohen Schichtdicken eingesetzt werden können, damit sie bei gleicher optischer Transparenz im Brandfall einen gegenüber dem Stand der Technik größeren Schutz gewähren, und sie sollen einen hohen Feststoffgehalt aufweisen, damit sie entweder bei gleicher Schichtdicke im Brandfall einen gegenüber dem Stand der Technik höheren Schutz ermöglichen, oder aber bei gleichem Brandschutz gegenüber dem Stand der Technik geringere Schichtdicken erforderlich sind. Geringere Schichtdicken führen dazu, daß die Masse und damit das Gewicht der Brandschutzmasse reduziert werden kann. Dies bringt Vorteile bei der Fertigung der Verglasungen. Ferner sollen die resultierenden Brandschutzmassen bei höheren Temperaturen (ca. 70 °C) und bei UV-Bestrahlung eine gegenüber dem Stand der Technik verbesserte Stabilität aufweisen.

Gelöst wird diese Aufgabe durch transparente, mehr oder minder viskose Flüssigkeiten auf der Basis wässriger Alkalisilicat-Lösungen, die aus wässrigen Lösungen eines oder mehrerer Alkalisilicate, und gegebenenfalls aus einem oder mehreren wasserlöslichen Geliermitteln und/oder aus einem oder mehreren wasserlöslichen Zusatzstoffen bestehen, und die dadurch gekennzeichnet sind, daß sie zu 3 bis 70 Gew.-%, bevorzugt zu 10 bis 50 Gew.-%, aus einem oder mehreren wasserlöslichen Silanolen der allgemeinen Formel (I) bestehen, gegebenenfalls in vorkondensierter Form,

$$Y_y\,Si\,(OH)_x\,R_{4-(x+y)} \qquad (I)$$

in der die Reste Y und R gleich oder verschieden sind und folgende Bedeutung haben:

R = Alkyl, Alkenyl, Aryl, Alkylaryl oder Arylalkyl,

Y = ein organischer Ligand, der einen mehrwertigen Alkohol, einen Aminoalkohol, ein Aminothiol, einen Mercaptoalkohol, ein Diamin, ein Triamin oder ein Dithiol darstellt, oder der sich von einem gegebenenfalls substituierten Oxiran, Thiiran oder Azirin durch hydrolytische Ringöffnung

ableitet,

y = 1, 2 oder 3,

x = 1, 2 oder 3, mit $x + y \leqq 4$,

Überraschenderweise wurde festgestellt, daß die erfindungsgemäßen Alkalisilicat-Lösungen nach Zugabe eines oder mehrerer Geliermittel zu transparenten Hydrogelen mit Feststoffgehalten von 30 bis 60 Gew.-% bei gleichzeitiger Lichtdurchlässigkeit von über 90 % (bei 10 mm Schichtdicke) verarbeitet werden können. Die resultierenden, erfindungsgemäßen Hydrogele zeigen selbst bei diesen hohen Feststoffgehalten keine Synärese.

Überraschenderweise wurde festgestellt, daß die aus den erfindungsgemäßen Alkalisilicat-Lösungen resultierenden, erfindungsgemäßen Hydrogele sich vorzüglich als Brandschutzmassen eignen, die wegen ihrer hohen optischen Transparenz bei gleichzeitig hohen Feststoffgehalten ganz besonders gut geeignet sind, in feuerwiderstandsfähigen Verglasungen verarbeitet zu werden.

Ferner wurde überraschenderweise festgestellt, daß Brandschutzgläser mit den erfindungsgemäßen Hydrogelen als Brandschutzmassen eine verbesserte Stabilität gegenüber UV-Bestrahlumg und gegenüber erhöhten Temperaturen von ca. 70 °C aufweisen, als die kommerziell erwerbbaren Brandschutzgläser.

Wegen der hohen Feststoffgehalte der erfindungsgemäßen Hydrogele sind bei deren Anwendung in Brandschutzgläsern bei gleichem Schutz im Brandfall gegenüber dem Stand der Technik geringere Gelschichtdicken erforderlich, was zu einer Verringerung der Elementdicke und zu einer Verringerung der flächenbezogenen Masse der Verglasung gegenüber dem Stand der Technik führt. Mit den erfindungsgemäßen Hydrogelen ist es z.B möglich, F 90-Scheiben mit einer Geldicke von nur 30 bis 35 mm zu erreichen, d.h. die resultierenden Elementdicken würden nur 40 bis 45 mm betragen und Massen von nur 61 bis 67 $kg/m^2$ Verglasung aufweisen. Zum Vergleich hierzu betragen die Massen von CONTRAFLAM F 90-Elementen 80 $kg/m^2$ und von PYROSTOP F 90-Elementen 120 $kg/m^2$. Außerdem würden F 90-Scheiben mit den erfindungsgemäßen Hydrogelen als Brandschutzmassen eine verbesserte optische Transparenz gegenüber dem Stand der Technik, z.B. gegenüber PYROSTOP F 90, zeigen.

Die erfindungsgemäßen, modifizierten Alkalisilicat-Lösungen bestehen aus wässrigen Alkalisilicat-Lösungen und aus einem oder mehreren wasserlöslichen Silanolen der allgemeinen Formel (I) und gegebenenfalls aus weiteren wasserlöslichen Zusatzstoffen. Zur Herstellung der erfindungsgemäßen Alkalisilicat-Lösungen werden eines oder mehrere wasserlösliche Silanole der allgemeinen Formel (III),

$$Y'_y \, Si \, (OH)_x \, R_{4-(x+y)} \qquad (III)$$

in der die Reste Y' und R gleich oder verschieden sind und folgende Bedeutung haben:

R = Alkyl, Alkenyl, Aryl, Alkylaryl oder Arylalkyl,

Y' = ein organischer Ligand, der einen mehrwertigen Alkohol, einen Aminoalkohol, ein Aminothiol, einen Mercaptoalkohol, ein Diamin, ein Triamin, ein Dithiol, oder ein gegebenenfalls substituiertes Oxiran, Thiiran oder Azirin darstellt,

y = 1, 2 oder 3,

x = 1, 2 oder 3, mit $x + y \leqq 4$,

gegebenenfalls als wässrige Lösungen und/oder in vorkondensierter Form, mit einer oder mehreren wässrigen Alkalisilicat-Lösungen, gegebenenfalls unter Wasserzusatz und/oder unter Zusatz wasserlöslicher Zusatzstoffe und/oder wasserlöslicher Farbstoffe und/oder von Geliermitteln, zu einer transparenten, mehr oder minder viskosen Flüssigkeit vermischt. Entscheidend ist dabei, daß die resultierende, viskose Flüssigkeit klar und transparent wird.

Der Rest R in den allgemeinen Formeln (I) und (III) kann Alkyl, Alkenyl, Aryl, Alkylaryl oder Arylalkyl sein. Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl. Die Alkoxy-, Acyloxy-, Alkylcarbonyl-, Alkoxycarbonyl- und Amino-Reste leiten sich bevorzugt von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Isocyanato, Nitro, Epoxy, $SO_3H$ und $PO_4H_2$. Unter den Halogenen sind Fluor, Chlor und Brom bevorzugt.

Der Rest Y in der allgemeinen Formel (I) bzw. der Rest Y' in der allgemeinen Formel (III) ist ein hydrophiler Ligand, der einen mehrwertigen Alkohol, einen Aminoalkohol, ein Aminothiol, einen Mercaptoalkohol, ein Diamin, ein Triamin oder ein Dithiol darstellt. Y' kann ferner ein gegebenenfalls substituiertes Oxiran, Thiiran oder Azirin sein, und Y leitet sich von diesen durch hydrolytische Ringöffnung ab.

Bevorzugt ist es, wenn sich Y von einem Glycidoxymethyl-, 2-Glycidoxyethyl-, 3-Glycidoxypropyl-, 4-Glycidoxybutyl-, Glycidylmethyl-, 2-Glycidylethyl-, 3-Glycidylpropyl- oder 4-Glycidylbutyl-Rest ableitet, wobei Glycidoxy die Gruppierung

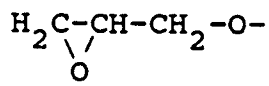

und Glycidyl die Gruppierung

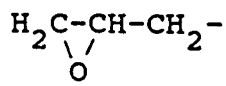

meint.

Konkrete Beispiele für die Reste Y und Y' sind $H_2C(OH)-CH(OH)-CH_2-$, $H_2C(OH)-CH(OH)-(O-CH_2-CH_2)_n-$, $H_2C(OH)-CH(OH)-$, $H_2C(NH_2)-CH(NH_2)-CH_2-$, $H_2C(NH_2)-CH(NH_2)-$, $H_2C(OH)-CH(NH_2)-$, $H_2C(OH)-CH(NH_2)-CH_2-O-(CH_2)_n-$, $H_2C(NH_2)-CH(OH)-$, $H_2C(NH_2)-CH(OH)-CH_2-O-(CH_2)_n-$, $H_2C(NH_2)-CH_2-NH-(CH_2)_n-$, $H_2C(NH_2)-CH-(NH-CH_2-CH_2)_n-$, $H_2C(OH)-CH(SH)-$, $H_2C(SH)-CH(OH)-CH_2-O-(CH_2)_n-$, $H_2C(SH)-CH(SH)-(O-CH_2-CH_2)_n-$, $H_2C(OH)-CH(SH)-(O-CH_2-CH_2)_n-$, $H_2C(SH)-CH(OH)-$, oder $H_2C(SH)-CH(SH)-$, mit $n = 1 - 10$.

Besonders bevorzugt sind $H_2C(OH)-CH(OH)-CH_2O-CH_2-$, $H_2C(OH)-CH(OH)-CH_2O-C_2H_4-$, $H_2C(OH)-CH(OH)-CH_2O-C_3H_6-$, $H_2C(OH)-CH(OH)-CH_2O-C_4H_8-$, $H_2C(OH)-CH(OH)-CH_2-CH_2-$, $H_2C(OH)-CH(OH)-CH_2-C_2H_4-$, $H_2C(OH)-CH(OH)-CH_2-C_3H_6-$, oder $H_2C(OH)-CH(OH)-CH_2-C_4H_8-$.

Konkrete Beispiele für die o.g. Oxirane, Thiirane oder Azirine sind

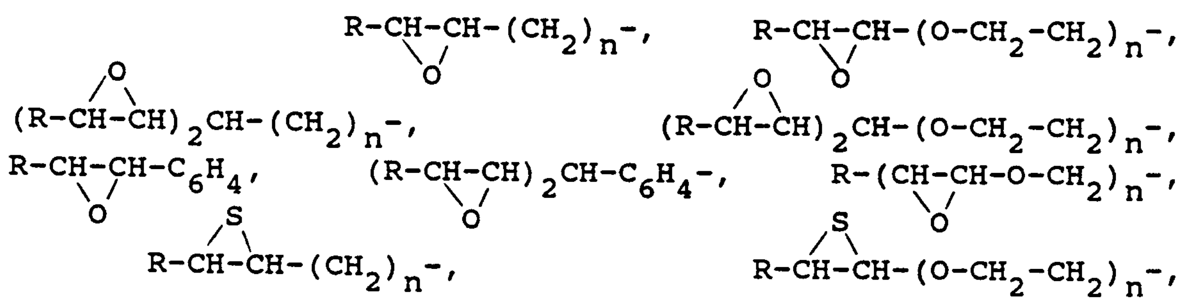

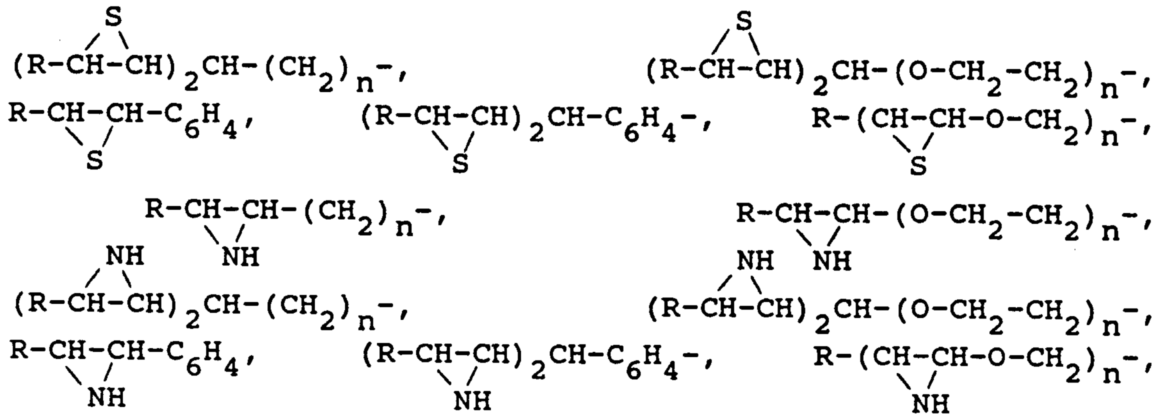

mit R = H, Alkyl oder Aryl und n = 0 - 10.

Besonders bevorzugt sind die folgenden Oxirane: $(C_2H_3O)CH_2$-O-$CH_2$-, $(C_2H_3O)CH_2$-O-$C_2H_4$-, $(C_2H_3O)CH_2$-O-$C_3H_6$-,$(C_2H_3O)CH_2$-O-$C_4H_8$-, $(C_2H_3O)CH_2$-$CH_2$-, $(C_2H_3O)CH_2$-$C_2H_4$-,$(C_2H_3O)CH_2$-$C_3H_6$- oder $(C_2H_3O)CH_2$-$C_4H_8$-.

Die Silanole der allgemeinen Formeln (I) und (III) sind derart gestaltet, daß an das Si-Atom mindestens eine OH-Gruppe und mindestens ein Ligand Y bzw. Y' gebunden ist, und daß die restlichen Valenzen durch die Reste R abgesättigt sind. Bei bevorzugten Ausführungsformen der Silanole der allgemeinen Formeln (I) und (III) sind keine Reste R vorhanden, d.h. die Summe der Indices x und y beträgt bevorzugt 4.

Der Anteil der Silanole der allgemeinen Formeln (I) bzw. (III) in den erfindungsgemäßen Alkalisilicat-Lösungen ist entsprechend dem Anwendungsfall in weiten Bereichen variierbar und liegt zwischen 3 und 70 Gew.-%, bevorzugt zwischen 10 und 50 Gew.-%.

Die Herstellung der erfindungsgemäßen Alkalisilicat-Lösungen kann auch in der Weise erfolgen, daß zuerst die Silanole der allgemeinen Formel (III) durch Hydrolyse geeigneter Silane hergestellt werden, und diese dann mit den Alkalisilicat-Lösungen und gegebenenfalls weiteren Zusatzstoffen vermischt weren. Dazu werden Silane der allgemeinen Formel (IV),

$$Y'_y\,Si\,X_x\,R_{4-(x+y)} \qquad (IV)$$

in der die Reste X, Y' und R gleich oder verschieden sind, Y', R, x und y die in Formel (III) genannte Bedeutung haben und

- X = Wasserstoff, Halogen, Hydroxy, Alkoxy, Acyloxy, Alkylcarbonyl, Alkorycarbonyl oder $NR'_2$ ist, mit R' = Wasserstoff, Alkyl oder Aryl,
- y = 1, 2 oder 3, und
- x = 1, 2 oder 3, mit $x+y \leqq 4$,

gegebenenfalls in Anwesenheit eines Katalysators und/oder eines Lösungsmittels, durch Einwirkung von Wasser oder Feuchtigkeit hydrolysiert. Anschließend werden die Hydrolyseprodukte XH und das gegebenfalls vorhandene Lösungsmittel ganz oder teilweise entfernt, und man vermischt die resultierenden Silanole, welche gegebenenfalls in vorkondensierter Form vorliegen, mit einer oder mehreren wässrigen Alkalisilicat-Lösungen zu einer transparenten, mehr oder minder viskosen Flüssigkeit. Gegebenenfalls erfolgt dies unter Wasserzusatz und/oder unter Zusatz wasserlöslicher Zusatzstoffe und/oder wasserlöslicher Farbstoffe und/oder von Geliermitteln.

Die Alkoxy-, Acyloxy-, Alkylcarbonyl-, Alkoxycarbonyl- und Amino-Reste im Liganden X der allgemeinen Formel (IV) leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$. Unter den Halogenen sind Fluor, Chlor und Brom bevorzugt.

Konkrete Beispiele für bevorzugte Silanole der allgemeinen Formel (III) sind $(C_2H_3O)$-$CH_2$-O-$(CH_2)_n$-$Si(OH)_3$, $(C_2H_3O)$-$(CH_2)_n$-$Si(OH)_3$, $(C_2H_3O)$-$CH_2$-(O-$CH_2$-$CH_2)_n$-$Si(OH)_3$, $(C_2H_3O)_2$-CH-$(CH_2)_n$-$Si(OH)_3$, [-$(C_2H_3O)$-$CH_2$-O-$(CH_2)_n]_2Si(OH)_2$, $(C_2H_3S)$-$CH_2$-O-$(CH_2)_n$-$Si(OH)_3$, $(C_2H_3S)_2$-CH-$(CH_2)_n$-$Si(OH)_3$, $(C_2H_3S)$-

$(CH_2)_n$-$Si(OH)_3$, $(C_2H_3S)$-$CH_2$-$(O$-$CH_2$-$CH_2)_n$-$Si(OH)_3$, $[(C_2H_3S)$-$CH_2$-$O$-$(CH_2)_n]_2Si(OH)_2$, $(C_2H_3NH)_2$-CH-$(CH_2)_n$-$Si(OH)_3$, $(C_2H_3NH)$-$CH_2$-O-$(CH_2)_n$-$Si(OH)_3$, $(C_2H_3NH)$-$(CH_2)_n$-$Si(OH)_3$, $(C_2H_3NH)$-$CH_2$-(O-$CH_2$-$CH_2)_n$-$Si(OH)_3$ oder $[(C_2H_3S)$-$CH_2$-O-$(CH_2)_n]_2Si(OH)_2$, mit n = 1 - 10.

Konkrete Beispiele für bevorzugte Silane der allgemeinen Formel (IV) sind $(C_2H_3O)$-$CH_2$-O-$(CH_2)_n$-Si-$(Cl)_3$, $(C_2H_3O)$-$(CH_2)_n$-$Si(Cl)_3$, $(C_2H_3O)$-$CH_2$-(O-$CH_2$-$CH_2)_n$-$Si(Cl)_3$, $(C_2H_3O)_2$-CH-$(CH_2)_n$-$Si(Cl)_3$, $[(C_2H_3O)$-$CH_2$-O-$(CH_2)_n]_2Si(Cl)_2$, $(C_2H_3S)$-$CH_2$-O-$(CH_2)_n$-$Si(Cl)_3$, $(C_2H_3S)_2$-CH-$(CH_2)_n$-$Si(Cl)_3$, $(C_2H_3S)$-$(CH_2)_n$-$Si(Cl)_3$, $(C_2H_3S)$-$CH_2$-(O-$CH_2$-$CH_2)_n$-$Si(Cl)_3$, $[(C_2H_3S)$-$CH_2$-O-$(CH_2)_n]_2Si(Cl)_2$, $(C_2H_3NH)_2$-CH-$(CH_2)_n$-$Si(Cl)_3$, $(C_2H_3NH)$-$CH_2$-O-$(CH_2)_n$-$Si(Cl)_3$, $(C_2H_3NH)$-$(CH_2)_n$-$Si(Cl)_3$, $(C_2H_3NH)$-$CH_2$-(O-$CH_2$-$CH_2)_n$-$Si(Cl)_3$, $[(C_2H_3S)$-$CH_2$-O-$(CH_2)_n]_2Si(Cl)_2$, $(C_2H_3O)$-$CH_2$-O-$(CH_2)_n$-$Si(OR)_3$, $(C_2H_3O)_2$-CH-$(CH_2)_n$-$Si(ORCl)_3$, $(C_2H_3O)$-$(CH_2)_n$-Si-$(OR)_3$, $(C_2H_3O)$-$CH_2$-(O-$CH_2$-$CH_2)_n$-$Si(OR)_3$, $[(C_2H_3O)$-$CH_2$-O-$(CH_2)_n]_2Si(OR)_2$, $(C_2H_3S)$-$CH_2$-O-$(CH_2)_n$-Si-$(OR)_3$ $(C_2H_3S)_2$-CH-$(CH_2)_n$-$Si(OR)_3$, $(C_2H_3S)$-$CH_2$-(O-$CH_2$-$CH_2)_n$-$Si(OR)_3$ $(C_2H_3S)$-$(CH_2)_n$-$Si(OR)_3$, $[(C_2H_3S)$-$CH_2$-O-$(CH_2)_n]_2Si(OR)_2$,$(C_2H_3NH)_2$-CH-$(CH_2)_n$-$Si(OR)_3$, $(C_2H_3NH)$-$CH_2$-O-$(CH_2)_n$-$Si(OR)_3$, $(C_2H_3NH)$-$(CH_2)_n$-$Si(OR)_3$, $(C_2H_3NH)$-$CH_2$-(O-$CH_2$-$CH_2)_n$-$Si(OR)_3$ oder $[(C_2H_3S)$-$CH_2$-O-$(CH_2)_n]_2Si(OR)_2$, mit n = 1 - 10 und R = $CH_3$ oder $C_2H_5$, wobei innerhalb eines Moleküls alle Kombinationen von Ethyl und Methyl möglich sind.

Silanole der allgemeinen Formel (III) und Silane der allgemeinen Formel (IV) sind entweder käuflich erwerbbar oder können nach bekannten Methoden selbst hergestellt werden. (Vgl. hierzu "Chemie und Technologie der Silicone" von Walter Noll, Verlag Chemie, Weinheim/Bergstr.)

Prinzipiell sind für die Herstellung der erfindungsgemäßen Alkalisilicat-Lösungen alle Alkalisilicate geeignet, auch Mischungen davon, wobei Lithium-, Natrium- und Kaliumsilicate bevorzugt, Wasserglaslösungen besonders bevorzugt und Natriumsilicat-Lösungen mit einem $SiO_2/Na_2O$-Verhältnis zwischen 3 und 3.5 ganz besonders bevorzugt sind.

Der Feststoffgehalt der erfindungsgemäßen, modifizierten Alkalisilicat-Lösung ist entsprechend dem Anwendungsfall in weiten Bereichen variierbar und kann durch Zugabe von weiteren wasserlöslichen Stoffen den Erfordernissen des jeweiligen Anwendungsfalles angepaßt werden. Bevorzugt ist es, wenn der Feststoffgehalt mindestens 30 Gew.-% beträgt, niedrigere Feststoffgehalte sind aber ebenfalls möglich.

Neben den Komponenten Alkalisilicat(e), Wasser und Silanol(e) der Formel (I) enthalten weitere Ausführungsformen der erfindungsgemäßen Alkalisilicat-Lösungen einen oder mehrere klar gelöste Zusatzstoffe, wobei in bevorzugten Ausführungsformen bis zu 10 Gew.-% der erfindungsgemäßen Alkalisilicat-Lösungen aus diesen Zusatzstoffen bestehen. Durch diese Zusatzstoffe kann das Eigenschaftsprofil der erfindungsgemäßen Alkalisilicat-Lösungen den Erfordernissen des jeweiligen Anwendungsfalles angepaßt werden.

Bei den Zusatzstoffen handelt es sich bevorzugt um Polyvinylalkohole, um Polyacrylsäuren, um Tetraalkylammonium-Salze, um Ethanolamine, um Glycerin, Ethylenglycol, Gummi arabicum, Guanidinsulfat, Kupfersulfat, Kupferacetat, Borsäure, Natriumphosphat, NaCl, NaOH, KOH, oder um Zucker-, Cellulose- oder Guar-Derivate, und ganz besonders bevorzugt handelt es sich um Harnstoff.

Desweiteren werden als Zusatzstoffe wasserlösliche, klar gelöste Silanole der allgemeinen Formel (II) bevorzugt, wobei diese gegebenenfalls in vorkondensierter Form vorliegen können.

$$R_{(4-m)}Si(OH)_m \qquad (II)$$

Die Reste R sind gleich oder verschieden und haben die in der allgemeinen Formel (I) genannte Bedeutung, m ist gleich 2 oder 3.

Konkrete Beispiele für Silanole der allgemeinen Formel (II) sind $CH_3Si(OH)_3$, $(CH_3)_2Si(OH)_2$, $C_2H_5Si(OH)_3$, $C_6H_5Si(OH)_3$, $(C_2H_5)(CH_3)Si(OH)_3$, $CH_2=CHSi(OH)_3$, $(CH_2=CH)(CH_3)Si(OH)_2$ und $(C_6H_5)_2Si(OH)_2$.

Desweiteren kommen als Zusatzstoffe wasserlösliche Farbstoffe in Betracht wie z.B. Levafix$^R$, Remazol$^R$, Procion$^R$, Cibacron$^R$ oder Indigo.

Die Zugabe von wasserlöslichen Zusatzstoffen erfolgt, um z.B. den Feststoffgehalt der erfindungsgemäßen Alkalisilicat-Lösung oder der daraus resultierenden Hydrogele zu erhöhen, und/oder um deren optische Eigenschaften oder deren Temperaturwechselverhalten zu verbessern. So werden z.B. Silanole der allgemeinen Formel (II), Polyvinylalkohole, Polyacrylsäure-, Zucker-, Cellulose- oder Guarderivate zugesetzt, um deren Feststoffanteil zu erhöhen, Tetraalkylammonium-Salze, um deren optische Eigenschaften zu verbessern und Harnstoff, Guanidinsulfat, Glycerin, Ethylenglycol oder anorganische Salze, um deren Materialverhalten bei thermischer Belastung positiv zu beeinflussen. Die letztgenannten Zusatzstoffe übernehmen dabei die Funktion eines Gefrierschutzmittels, das dafür Sorge trägt, daß bei niedrigen Temperaturen in Folge einer Gefrierpunktserniedrigung das Wasser, insbesondere im resultierenden Hydrogel, nicht gefriert. Hierbei sind Guanidinsulfat und Harnstoff ganz besonders bevorzugt, weil sie den Vorteil bieten, daß ihre Löslichkeit in den erfindungsgemäßen Alkalisilicat-Lösungen größer ist als die von anorganischen Salzen.

Überraschenderweise wurde festgestellt, daß die o. g. Silanole der allgemeinen Formel (III) in nahezu beliebigen Mengenverhältnissen mit wässrigen Alkailisilicat-Lösungen vermischt werden können, ohne daß Gelbildung, Ausfällung oder Eintrübung stattfindet. Die Gelbildung wird erst durch Zugabe bekannter Geliermittel erreicht. Dabei neutralisiert das Geliermittel das in der wässrigen Alkailisilicat-Lösung vorliegende Alkalihydroxid, der pH-Wert der Lösung wird abgesenkt, die Kondensation eingeleitet, und die Masse verfestigt sich.

Überraschenderweise wurde festgestellt, daß die erfindungsgemäßen Alkalisilicat-Lösungen mit bekannten Geliermitteln zu transparenten Gelen (Hydrogelen) mit Feststoffgehalten von bis zu 60 Gew.-% praktisch ohne Volumenschrumpfung aushärten, ohne daß eine Ausfällung oder Eintrübung erfolgt.

Überraschenderweise wurde festgestellt, daß die erfindungsgemäßen Hydrogele eine ausgezeichnete optische Transparenz besitzen. So weisen z.B. erfindungsgemäß hergestellte Hydrogele bei einer Schichtdicke von 10 mm im Bereich zwischen 400 und 800 nm und bei Temperaturen zwischen - 20 und + 100 °C eine Lichttransmission von mehr als 90 % auf. Sie sind deshalb für einen Einsatz in Verglasungen besonders gut geeignet.

Bevorzugte Geliermittel sind Ester organischer Säuren, Ester anorganischer Säuren mit mehrwertigen Alkoholen oder Ester vom Alkylencarbonat-Typ, wobei besonders bevorzugt Ethylen- oder Propylencarbonat eingesetzt wird. Diese zuletzt genannten Geliermittel bieten den Vorteil, daß bei ihrer Hydrolyse Produkte entstehen, die zusätzlich die Funktion eines Gefrierschutzmittels haben, so wie es bereits oben beschrieben wurde.

Zur Herstellung der erfindungsgemäßen Hydrogele werden die erfindungsgemäßen Alkalisilicat-Lösungen und das Geliermittel innig vermischt und umgehend dem Formgebungsverfahren unterzogen. Dabei versteht es sich von selbst, daß zur Herstellung transparenter Hydrogele nur solche Geliermittel und diese nur in solchen Mengen eingesetzt werden, daß das resultierende Hydrogel wirklich transparent und nicht durch nicht-gelöstes Geliermittel getrübt ist. Da Ester organischer Säuren im allg. nicht wasserlöslich sind, wird beim Vermischen der erfindungsgemäßen Alkalisilicat-Lösung mit Ethylen- oder Propylencarbonat dieses Geliermittel zunächst durch kräftiges Rühren in der Alkalisilicat-Lösung dispergiert. Erst durch die ablaufende Verseifungsreaktion "lösen" sich die feinen Tröpfchen auf und es resultiert eine transparente Masse.

Die erfindungsgemäßen Alkalisilicat-Lösungen sind unter Luftabschluß, d.h. unter $CO_2$-Ausschluß, lagerstabil mit Topfzeiten von mindestens einigen Monaten. Nach dem Vermischen mit einem Geliermittel verbleibt bei Raumtemperatur eine Verarbeitungszeit von ca. 15 bis 20 Minuten, bevor das Gemisch erstarrt. Diese Zeit kann verdoppelt werden, wenn die Temperatur der erfindungsgemäßen Alkalisilicat-Lösung vor der Zugabe des Geliermittels auf 2 bis 5 °C gesenkt wird. Bei Verwendung geringer Mengen Geliermittel resultieren Gele, die nur bei Raumtemperatur fest sind, bei Temperaturerhöhung (70 bis 100 °C) aber zu einer zähflüssigen Masse erweichen, die dann bei anschließender Temperatursenkung wieder zu transparenten Gelen erstarrt. Die Menge an Geliermittel, die erforderlich ist, um ein Erweichen der erfindungsgemäßen Hydrogele bei Temperaturen bis ca. 100 °C zu verhindern, kann jedoch vom Fachmann anhand von wenigen Versuchen leicht ermittelt werden. Hier sei noch darauf hingewiesen, daß Gele mit hohem Geliermittelanteil zur Eintrübung neigen, insbesondere bei Temperaturwechselbelastungen.

Ferner ist es möglich, den erfindungsgemäßen Alkalisilicat-Lösungen zunächst nur soviel Geliermittel zuzusetzen, daß die resultierende Mischung flüssig bzw. verformbar bleibt, und erst unmittelbar vor dem endgültigen Formgebungsprozeß das restliche Geliermittel zuzugeben.

Werden die erfindungsgemäßen Hydrogele als Brandschutzmassen in Verglasungen eingesetzt, so ist bzgl. der Menge des zugesetzten Geliermittels ein Kompromiss zu schließen. Um einen optimalen Brandschutz zu erhalten, sollte die Menge an Geliermittel möglichst hoch sein, um ein günstiges Temperaturwechselverhalten zu erreichen, sollte die Menge an Geliermittel jedoch nicht zu hoch sein.

Die erfindungsgemäßen, gelbildenden Gemische können entweder in Hohlräume, wie z.B. in Zwischenräume zwischen Platten aus z.B. Silicat- oder Borosilicat-Glas, aus Kunststoffen (z.B. aus Macrolon, d.h. Polycarbonat, aus Polyvinylbutyral oder aus Plexiglas) oder aus Metallen, oder zwischen organischen Folien (z.B. aus thermoplastischem Polyurethan oder aus Polyester) eingebracht und dort ausgehärtet werden, oder sie können zur Herstellung von Beschichtungen auf den unterschiedlichsten Substraten eingesetzt werden.

Die erfindungsgemäßen Hydrogele bilden aufgrund ihres Wassergehaltes und ihres hohen Feststoffgehaltes ausgezeichnete Brandschutzmassen, die wegen ihrer hervorragenden optischen Transparenz und wegen ihrer geringen Volumenschrumpfung bei der Härtung bestens für den Einsatz in Brandschutzverglasungen geeignet sind. Überraschenderweise wurde bei der Härtung auf Mineralglasoberflächen ein besonders geringer Volumenschrumpf beobachtet, was möglicherweise darauf zurückzuführen ist, daß eine Wechselwirkung zwischen den SiOH-Gruppen der Silanole der allgemeinen Formeln (I) und (II) und der

Mineralglasoberfläche auftritt, die zu einer besseren Benetzbarkeit des Glases mit der erfindungsgemäßen, gelbildenden Masse führt.

Die erfindungsgemäßen Hydrogele sind nicht nur geeignet, als Festkörperbrandschutzmassen in Brandschutzgläsern eingesetzt zu werden, sondern sie können auch bestens für die Herstellung von anderen Brandschutzelementen, von Verbundgläsern, von Verbundsicherheitsgläsern oder von Schallschutzgläsern verwendet werden.

Die erfindungsgemäßen Alkalisilicat-Lösungen können nicht nur zur Herstellung der erfindungsgemäßen Hydrogele eingesetzt werden, sondern sie können ebenso als Flammschutzmittel, für Beschichtungen aller Art (z.B. von Bauteilen oder von Bauwerksteilen), zur Herstellung von lichtdurchlässigen Formkörpern, Folien oder Fasern, und zur Herstellung von Säurekitten oder Dichtungsmassen verwendet werden.

Anhand von Ausführungsbeispielen werden die erfindungsgemässen Alkalisilicat-Lösungen und die daraus resultierenden, erfindungsgemäßen Hydrogele näher erläutert.

Erfindungsgemäße Alkalisilicat-Lösungen enthalten z.B.
50 bis 100 g technische Wasserglaslösung,
50 bis 0 g Wasser,
5 bis 100 g Epoxysilanol,
und gegebenenfalls weitere, bereits genannte, wasserlösliche Zusatzstoffe. Dabei kann das Wasser teilweise oder vollständig z.B. durch eine wässrige Tetraalkylammonium-Lösung ersetzt sein. Als Geliermittel werden z.B. 2 bis 15 g Ester organischer Säuren oder Ester vom Alkylencarboant-Typ eingesetzt. Nach Vermischen mit dem Geliermittel verbleibt bei Raumtemperatur eine Verarbeitungszeit von ca. 15 bis 20 Minuten. Bei Verwendung geringerer Mengen Geliermittel (2 bis 5 g) resultieren erfindungsgemäße Gele, die bei Raumtemperatur fest sind, bei Temperaturen von 70 bis 100 °C aber zu zähflüssigen Massen erweichen, die bei einer anschließenden Temperatursenkung wieder zu transparenten Gelen erstarren. Erfindungsgemäße Gele mit hohem Anteil an Geliermittel (über ca. 12 g) neigen zu Eintrübungen.

**Beispiel 1:** Herstellung eines Epoxysilanols

Zu 500 g 3-Glycidyloxypropyltrimethoxysilan (Glymo) werden unter Rühren 114 g 0.01 N HCl getropft. Das Gemisch wird innerhalb von 5 Stunden im Wasserstrahlvakuum auf 450 g eingeengt. Die resultierende Flüssigkeit enthält monomere und oligomere Silanole. Der Restsalkoholgehalt kann bis zu etwa 25 % betragen. Das so hergestellte Epoxysilanol wird zu den erfindungsgemäßen Alkalisilicat-Lösungen verarbeitet. Anstelle davon kann auch das Produkt HYDROSIL 2759 der Firma Hüls eingesetzt werden.

**Beispiel 2:** Herstellung einer erfindungsgemäßen Alkalisilicat-Lösung

Zu 4.0 kg technischer Natronwasserglas-Lösung 38/40 (Dichte 1.37 g/cm$^3$, Molverhältnis $SiO_2$:$Na_2O$ = 3.3) werden unter Rühren 1.0 kg Wasser und 0.9 kg Epoxysilanol gemäß Beispiel 1 innerhalb von 3 Stunden gegeben. Die resultierende Mischung wird 24 Stunden bei 55 °C gerührt.

**Beispiel 3:** Herstellung einer erfindungsgemäßen Alkalisilicat-Lösung

Zu 4.0 kg technischer Natronwasserglas-Lösung 38/40 werden unter Rühren 0.5 kg Wasser, 0.5 kg 20 %-ige, wäßrige Tetraethylammoniumhydroxid-Lösung, 0.5 kg Guanidinsulfat und 0.6 kg Epoxysilanol gemäß Beispiel 1 innerhalb von 3 Stunden gegeben. Die resultierende Mischung wird 24 Stunden bei 50 °C gerührt.

**Beispiel 4:** Herstellung einer erfindungsgemäßen Alkalisilicat-Lösung

Zu 4.0 kg technischer Natronwasserglas-Lösung 38/40 werden unter Rühren 1.0 kg Wasser, 0.5 kg Harnstoff und 0.7 kg Epoxysilanol gemäß Beispiel 1 innerhalb von 3 Stunden gegeben. Die resultierende Mischung wird 24 Stunden bei 50 °C gerührt.

**Beispiel 5:** Herstellung eines erfindungsgemäßen Hydrogels

Zu 1.0 kg Alkalisilicat-Lösung gemäß Beispiel 2 werden 65 g Propylencarbonat eingerührt. Das resultierende Gemisch wird in Glasbehälter gefüllt und härtet nach ca. 15 Minuten ohne nennenswerte Volumenschrumpfung zu einem klaren und transparenten Gel.

**Beispiel 6:** Herstellung eines erfindungsgemäßen Hydrogels

Zu 1.0 kg Alkalisilicat-Lösung gemäß Beispiel 3 werden 65 g Propylencarbonat eingerührt. Das resultierende Gemisch wird in Glasbehälter gefüllt und härtet nach ca. 15 Minuten ohne nennenswerte Volumenschrumpfung zu einem klaren und transparenten Gel.

**Beispiel 7:** Herstellung eines erfindungsgemäßen Hydrogels

Zu 1.0 kg Alkalisilicat-Lösung gemäß Beispiel 4 werden 65 g Propylencarbonat eingerührt. Das resultierende Gemisch wird in Glasbehälter gefüllt und härtet nach ca. 15 Minuten ohne nennenswerte Volumenschrumpfung zu einem klaren und transparenten Gel.

Die Abbildung zeigt die Transmission einer erfindungsgemäßen Alkalisilicat-Lösung ( — ) und zweier daraus hergestellter Hydrogele ( **---** ). Die Messung erfolgte in Kieselglasküvetten gegen Luft, die Schichtdicke betrug 10 mm. Die erfindungsgemäße Alkalisilicat-Lösung besteht aus 8.0 g Natronwasserglas 38/40 der Firma Woellner (27.5 % $SiO_2$, 8.3 % $Na_2O$, und 64.2 % $H_2O$), aus 2.0 g $H_2O$ und aus 1.75 g Epoxysilantriol. Dieser Alkalisilicat-Lösung wurden zur Herstellung der erfindunsgemäßen Hydrogele einmal 0.60 g und einmal 0.70 g Propylencarbonat zugegeben. Die so bereiteten Hydrogele zeigen identische Transmissionen, sodaß in der Abbildung nur zwei unterschiedliche Kurven zu sehen sind.

## Patentansprüche

1. Transparente, mehr oder minder viskose Flüssigkeit auf der Basis wässriger Alkalisilicat-Lösungen, bestehend aus einer wässrigen Lösung eines oder mehrerer Alkalisilicate, und gegebenenfalls aus einem oder mehreren wasserlöslichen Geliermitteln und/oder aus einem oder mehreren wasserlöslichen Zusatzstoffen, **dadurch gekennzeichnet**, daß sie zu 3 bis 70 Gew.-%, bevorzugt zu 10 bis 50 Gew.-%, aus einem oder mehreren wasserlöslichen Silanolen der allgemeinen Formel (I) besteht, gegebenenfalls in vorkondensierter Form,

   $$Y_y\,Si\,(OH)_x\,R_{4-(x+y)} \qquad (I)$$

   in der die Reste Y und R gleich oder verschieden sind und folgende Bedeutung haben:
   R = Alkyl, Alkenyl, Aryl, Alkylaryl oder Arylalkyl,
   Y = ein organischer Ligand, der einen mehrwertigen Alkohol, einen Aminoalkohol, ein Aminothiol, einen Mercaptoalkohol, ein Diamin, ein Triamin oder ein Dithiol darstellt, oder der sich von einem gegebenenfalls substituierten Oxiran, Thiiran oder Azirin durch hydrolytische Ringöffnung ableitet,
   y = 1, 2 oder 3,
   x = 1, 2 oder 3, mit $x + y \leqq 4$,

2. Flüssigkeit nach Anspruch 1, **dadurch gekennzeichnet**, daß sich Y von einem Glycidoxymethyl-, 2-Glycidoxyethyl-, 3-Glycidoxypropyl-, 4-Glycidoxybutyl-, Glycidylmethyl-, 2-Glycidylethyl-, 3-Glycidylpropyl- oder 4-Glycidylbutyl-Rest ableitet.

3. Flüssigkeit nach Anspruch 1 oder 2, **dadurch gekennzeichnet**, daß die Summe der Indices x und y bevorzugt 4 beträgt.

4. Flüssigkeit nach einem oder mehreren der Ansprüche 1 bis 3, **dadurch gekennzeichnet**, daß es sich bei den Alkalisilicaten bevorzugt um Lithium-, Natrium- oder Kaliumsilicate handelt.

5. Flüssigkeit nach Anspruch 4, **dadurch gekennzeichnet**, daß es sich bei den wässrigen Alkalisilicat-Lösungen um Wasserglaslösungen handelt.

6. Flüssigkeit nach Anspruch 5, **dadurch gekennzeichnet**, daß es sich bei den Wasserglas-Lösungen bevorzugt um Natriumsilicat-Lösungen mit einem $SiO_2/Na_2O$-Verhältnis zwischen 3 und 3.5 handelt.

7. Flüssigkeit nach einem oder mehreren der Ansprüche 1 bis 6, **dadurch gekennzeichnet**, daß deren Feststoffgehalt bevorzugt mindestens 30 Gew.-% beträgt.

8. Flüssigkeit nach einem oder mehreren der Ansprüche 1 bis 7, **dadurch gekennzeichnet**, daß bis zu 10 Gew.-% aus einem oder mehreren klar gelösten Zusatzstoffen bestehen.

9. Flüssigkeit nach Anspruch 8, **dadurch gekennzeichnet**, daß es sich bei den Zusatzstoffen bevorzugt um Polyvinylalkohole, um Polyacrylsäuren, um Tetraalkylammonium-Salze, um Ethanolamine, um Glycerin, Ethylenglycol, Gummi arabicum, Guanidinsulfat, Kupfersulfat, Kupferacetat, Borsäure, Natriumphosphat, NaCl, NaOH, KOH, oder um Zucker-, Cellulose- oder Guar-Derivate, und ganz besonders bevorzugt um Harnstoff handelt.

10. Flüssigkeit nach Anspruch 8 oder 9, **dadurch gekennzeichnet**, daß es sich bei den Zusatzstoffen um wasserlösliche, klar gelöste Silanole der allgemeinen Formel (II) handelt, gegebenenfalls in vorkondensierter Form,

$R_{(4-m)}Si(OH)_m$ (II)

in der die Reste R gleich oder verschieden sind und die in Anspruch 1 genannte Bedeutung haben, und m gleich 2 oder 3 ist.

11. Flüssigkeit nach einem oder mehreren der Ansprüche 1 bis 10, **dadurch gekennzeichnet**, daß sie einen oder mehrere, klar gelöste Farbstoffe enthält.

12. Flüssigkeit nach einem oder mehreren der Ansprüche 1 bis 11, **dadurch gekennzeichnet**, daß sie eines oder mehrere Geliermittel enthält.

13. Flüssigkeit nach Anspruch 12, **dadurch gekennzeichnet**, daß es sich bei dem Geliermittel um Ester organischer Säuren, um Ester anorganischer Säuren mit mehrwertigen Alkoholen oder um Ester vom Alkylencarbonat-Typ, bevorzugt um Ethylen- oder Propylencarbonat handelt.

14. Verfahren zur Herstellung von Flüssigkeiten nach einem oder mehreren der Ansprüche 1 bis 12, **dadurch gekennzeichnet**, daß man eines oder mehrere wasserlösliche Silanole der allgemeinen Formel (III),

$Y'_y\ Si\ (OH)_x\ R_{4-(x+y)}$ (III)

in der die Reste Y' und R gleich oder verschieden sind und folgende Bedeutung haben:

R = Alkyl, Alkenyl, Aryl, Alkylaryl oder Arylalkyl,

Y' = ein organischer Ligand, der einen mehrwertigen Alkohol, einen Aminoalkohol, ein Aminothiol, einen Mercaptoalkohol, ein Diamin, ein Triamin, ein Dithiol, oder ein gegebenenfalls substituiertes Oxiran, Thiiran oder Azirin darstellt,

y = 1, 2 oder 3,

x = 1, 2 oder 3, mit $x + y \leq 4$,

gegebenenfalls als wässrige Lösungen und/oder in vorkondensierter Form, mit einer oder mehreren wässrigen Alkalisilicat-Lösungen, gegebenenfalls unter Wasserzusatz und/oder unter Zusatz wasserlöslicher Zusatzstoffe und/oder wasserlöslicher Farbstoffe und/oder von Geliermitteln, zu einer transparenten, mehr oder minder viskosen Flüssigkeit vermischt.

15. Verfahren nach Anspruch 14, **dadurch gekennzeichnet**, daß man ein Silanol der allgemeinen Formel (III), gegebenenfalls in vorkondensierter Form, einsetzt, in der Y' Glycidoxymethyl, 2-Glycidoxyethyl, 3-Glycidoxypropyl, 4-Glycidoxybutyl, Glycidylmethyl, 2-Glycidylethyl, 3-Glycidylpropyl oder 4-Glycidylbutyl bedeutet.

16. Verfahren zur Herstellung von Flüssigkeiten nach einem oder mehreren der Ansprüche 1 bis 12, **dadurch gekennzeichnet**, daß man Silane der allgemeinen Formel (IV),

$Y'_y\ Si\ X_x\ R_{4-(x+y)}$ (IV)

in der die Reste X, Y' und R gleich oder verschieden sind, Y', R, x und y die in Anspruch 14 genannte Bedeutung haben und

X = Wasserstoff, Halogen, Hydroxy, Alkoxy, Acyloxy, Alkylcarbonyl, Alkoxycarbonyl oder $NR'_2$ ist, mit R' = Wasserstoff, Alkyl oder Aryl,
y = 1, 2 oder 3, und
x = 1, 2 oder 3, mit $x + y \leqq 4$,

gegebenenfalls in Anwesenheit eines Katalysators und/oder eines Lösungsmittels, durch Einwirkung von Wasser oder Feuchtigkeit hydrolysiert, daß man die Hydrolyseprodukte XH und das gegebenfalls vorhande Lösungsmittel ganz oder teilweise entfernt, und daß man die resultierenden Silanole, gegebenenfalls in vorkondensierter Form, mit einer oder mehreren wässrigen Alkalisilicat-Lösungen, gegebenenfalls unter Wasserzusatz und/oder unter Zusatz wasserlöslicher Zusatzstoffe und/oder wasserlöslicher Farbstoffe und/oder von Geliermitteln zu einer transparenten, mehr oder minder viskosen Flüssigkeit vermischt.

**17.** Verfahren nach Anspruch 16, **dadurch gekennzeichnet**, daß man ein Silan der allgemeinen Formel (IV) einsetzt, in der Y' Glycidoxymethyl, 2-Glycidoxyethyl, 3-Glycidoxypropyl, 4-Glycidoxybutyl, Glycidylmethyl, 2-Glycidylethyl, 3-Glycidylpropyl oder 4-Glycidylbutyl bedeutet.

**18.** Verfahren nach einem oder mehreren der Ansprüche 14 bis 17, **dadurch gekennzeichnet**, daß man als wässrige Alkalisilicat-Lösung eine technische Wasserglaslösung einsetzt.

**19.** Verwendung der Flüssigkeit nach einem oder mehreren der Ansprüche 1 bis 13 zur Herstellung transparenter Hydrogele, oder zur Herstellung lichtdurchlässiger Formkörper, Folien oder Fasern.

**20.** Verwendung der Flüssigkeit nach einem oder mehreren der Ansprüche 1 bis 13 als Flammschutzmittel, zur Herstellung von Festkörperbrandschutzmassen, zur Herstellung von Brandschutzbauelementen, von Brandschutz-, Schallschutz-, Verbund- oder Verbundsicherheitsgläsern oder für die Beschichtung von Bauteilen und Bauwerksteilen.

**21.** Verwendung der Flüssigkeit nach einem oder mehreren der Ansprüche 1 bis 13 zur Herstellung von Säurekitten, von Dichtungsmassen, von Isoliermaterialien, von Beschichtungen oder von Zwei-Komponenten-Gießharz-Systemen.

## Claims

**1.** Transparent, more or less viscous liquid on the basis of aqueous solutions of alkali silicates, comprising an aqueous solution of one or more alkali silicates and possibly of one or more water-soluble gelling agents and/or one or more water-soluble additives, characterized in that it contains by 3 to 70 wt-%, preferably 10 to 50 wt-%, one or more water-soluble silanols of the general formula (I), possibly precondensed,

$$Y_y\ Si\ (OH)_x\ R_{4-(x+y)} \qquad (I)$$

wherein the residues Y and R may be identical or different and
R is alkyl, alkylene, aryl, alkylaryl or aryl alkyl
Y is an organic residue representing a polyalcohol, an amino alcohol, an amino thiol, a mercaptoalcohol, a diamine, a triamine or a dithiol or deriving from a possibly substituted oxirane, thiirane or azirine by hydrolytic decyclization,
y is 1, 2 or 3
x is 1, 2 or 3, wherein $x + y \leqq 4$.

**2.** Liquid according to claim 1, characterized in that Y is derived from a glycidoxymethyl, a 2-glycidoxyethyl, a 3-glycidoxypropyl, a 4-glycidoxybutyl, a glycidylmethyl, a 2-glycidylethyl, a 3-glycidylpropyl or a 4-glycidylbutyl residue.

**3.** Liquid according to claim 1 or 2, characterized in that the total amount of the indices x and y preferably is 4.

**4.** Liquid according to one or more of the claims 1 to 3, characterized in that the alkali silicates preferably are lithium silicate, sodium silicate or potassium silicate.

5. Liquid according to claim 4, characterized in that the aqueous solutions of alkali silicates are waterglass solutions.

6. Liquid according to claim 5, characterized in that the waterglass solutions preferably are solutions of sodium silicate wherein the $SiO_2/Na_2O$ ratio is 3 to 3.5.

7. Liquid according to one or more of the claims 1 to 6, characterized in that its solids content is preferably at least 30 wt-%.

8. Liquid according to one or more of the claims 1 to 7, characterized in that it contains up to 10 wt-% of one or more completely dissolved additives.

9. Liquid according to claim 8, characterized in that the additives preferably are polyvinyl alcolhols, polyacrylic acids, tetraalkyl ammonium salts, 2-aminoethanols, glycerol, ethylene glycol, gum arabic, guanidine sulfate, copper sulfate, copper acetate, boric acid, sodium phosphate, NaCl, NaOH, KOH or derivatives of sugars, cellulose or guar and, as it is especially preferred, urea.

10. Liquid according to claim 8 or 9, characterized in that the additives are water-soluble, completely dissolved silanols of the general formula (II), possibly precondensed,

$R_{(4-m)}Si(OH)_m$ (II)

wherein the residues R may be identical or different and are as defined in claim 1, and m is 2 or 3.

11. Liquid according to one or more of the claims 1 to 10, characterized in that it contains one or several completely dissolved dyes.

12. Liquid according to one or more of the claims 1 to 11, characterized in that it contains one or several gelling agents.

13. Liquid according to claim 12, characterized in that the gelling agents are esters of organic acids, esters of anorganic acids with polyalcohols, or alkylen carbonate-type esters, preferably ethylene carbonate or 1,2-propylen carbonate.

14. A method for preparing liquids according to one or more of the claims 1 to 12, characterized in that one or more water-soluble silanols of the general formula (III)

$Y'_y\ Si\ (OH)_x\ R_{4-(x+y)}$ (III)

wherein the residues Y' and R may be identical or different and

R is alkyl, alkylene, aryl, alkylaryl or aryl alkyl

Y' is an organic residue representing a polyalcohol, an amino alcohol, an amino thiol, a mercaptoalcohol, a diamine, a triamine or a dithiol or a possibly substituted oxirane, thiirane or azirine,

y is 1, 2 or 3

x is 1, 2 or 3, wherein $x + y \leqq 4$,

eventually as an aqueous solution or precondensed, are mixed with one or more aqueous solutions of alkali silicate, eventually with addition of water and/or water-soluble additives and/or water-soluble dyes and/or gelling agents, resulting in a transparent, more or less viscous liquid.

15. A method according to claim 14, characterized in that a possibly precondensed silanol of the general formula (III) is applied wherein Y' is a glycidoxymethyl, 2-glycidoxyethyl, 3-glycidoxypropyl, 4-glycidoxybutyl, glycidylmethyl, 2-glycidylethyl, 3-glycidylpropyl or 4-glycidylbutyl residue.

16. A method for preparing liquids according to one or more of the claims 1 to 12, characterized in that silanes of the general formula (IV)

$Y'_y\ Si\ X_x\ R_{4-(x+y)}$ (IV)

wherein the residues X, Y' and R may be identical or different, Y', R, x and y are as defined in claim 14 and

X is hydrogen, halogen, hydroxy, alkoxy, acyloxy, alkyl carbonyl, alkoxy carbonyl or $NR'_2$ wherein R' is hydrogen, alkyl or aryl,

y is 1, 2 or 3 and

x is 1, 2 or 3 wherein $x+y \leqq 4$, are hydrolyzed by exposure to water or humidity, eventually in the presence of a catalyst and/or a solvent, that the hydrolysis products XH and the eventually existing solvent are completely or partially removed, and that the resulting, possibly precondensed silanols are mixed with one or several aqueous solutions of alkali silicate, eventually with addition of water and/or water-soluble additives and/or water-soluble dyes and/or gelling agents, resulting in a transparent, more or less viscous liquid.

**17.** A method according to claim 16, characterized in that a silane of the general formula (IV) is applied wherein Y' is a glycidoxymethyl, 2-glycidoxyethyl, 3-glycidoxypropyl, 4-glycidoxybutyl, glycidylmethyl, 2-glycidylethyl, 3-glycidylpropyl or 4-glycidylbutyl residue.

**18.** A method according to one or more of the claims 14 to 17, characterized in that the applied aqueous solution of alkali silicate is a technical waterglass solution.

**19.** Use of a liquid according to one or more of the claims 1 to 13 for the preparation of transparent hydrogels or of light transmitting moulded pieces, sheets or fibers.

**20.** Use of the liquid according to one or more of the claims 1 to 13 as a flameproofing agent, or for the preparation of solid fire-protection substances, of fire-protection construction elements, of fire-protection glasses, of soundproofing glasses, of multilayer glasses or multilayer safety glasses, or for the coating of constructional elements and parts of buildings.

**21.** Use of the liquid according to one or more of the claims 1 to 13 for the preparation of acidproof cements, of sealing compounds, of insulating materials, of coatings or of two-part casting compounds.

**Revendications**

**1.** Liquide transparent, plus ou moins visqueux, à base de solutions aqueuses de silicate alcalin, constitué par une solution aqueuse d'un ou de plusieurs silicates alcalins, et le cas échéant, d'un ou de plusieurs gélifiants solubles dans l'eau et/ou d'un ou de plusieurs adjuvants solubles dans l'eau, caractérisé en ce qu'il est constitué par 3 à 70 % en poids, de préférence par 10 à 50 % en poids, d'un ou de plusieurs silanols solubles dans l'eau, de formule générale suivante (I), le cas échéant sous forme précondensée :

$$Y_y\, Si\, (OH)_x\, R_{4-(x+y)} \qquad (I)$$

dans laquelle les restes Y et R peuvent être identiques ou différents et ont la signification suivante :

R = alkyle, alcènyle, aryle, alkylaryle ou arylalkyle,

Y = un ligand organique qui représente un alcool à plusieurs valences, un amino-alcool, un amino-thiol, un mercapto-alcool, une diamine, une triamine ou un dithiol, ou bien qui dérive d'un oxirane, d'un thiirane ou d'une azirine, éventuellement substitués, par ouverture hydrolytique d'un composé cyclique,

y = 1, 2 ou 3, et

x = 1, 2 ou 3, avec $x + y \leqq 4$,

**2.** Liquide selon la revendication 1, caractérisé en ce que Y est dérivé d'un reste de glycidoxyméthyle, de 2-glycidoxyéthyle, de 3-glycidoxypropyle, de 4-glycidoxybutyle, de glycidylméthyle, de 2-glycidyléthyle, de 3-glycidylpropyle ou de 4-glycidylbutyle.

**3.** Liquide selon les revendications 1 ou 2, caractérisé en ce que la somme des indices x et y est de préférence égale à 4.

4. Liquide selon l'une ou plusieurs des revendications 1 à 3, caractérisé en ce que le silicate alcalin est de préférence un silicate de lithium, de sodium ou de potassium.

5. Liquide selon la revendication 4, caractérisé en ce que les solutions aqueuses de silicate alcalin sont des solutions de verre soluble.

6. Liquide selon la revendication 5, caractérisé en ce que les solutions de verre soluble sont de préférence des solutions de silicate de sodium, le rapport $SiO_2$ / $Na_2O$ étant compris entre 3 et 3,5.

7. Liquide selon l'une ou plusieurs des revendications 1 à 6, caractérisé en ce que sa teneur en particules solides est de préférence d'au moins 30 % en poids.

8. Liquide selon l'une ou plusieurs des revendications 1 à 7, caractérisé en ce qu'il comporte jusqu'à 10 % en poids d'un ou de plusieurs adjuvants en solution limpide.

9. Liquide selon la revendication 8, caractérisé en ce que les adjuvants sont de préférence des alcools de polyvinyle, des acides polyacryliques, des sels d'ammonium tétraalkyle, de l'éthanolamine, de la glycérine, de l'éthylène glycol, de la gomme arabique, du sulfate de guanidine, du sulfate de cuivre, de l'acétate de cuivre, un acide de bore, du phosphate de sodium, NaCl, NaOH, KOH ou bien des dérivés de sucre, de cellulose ou de guar et, plus particulièrement et de préférence, de l'urée.

10. Liquide selon les revendications 8 ou 9, caractérisé en ce que les adjuvants sont des silanols solubles dans l'eau, en solution limpide, de formule générale suivante (II), le cas échéant sous forme précondensée :

$R_{(4-m)}$ Si $(OH)_m$ (II)

dans laquelle les restes R peuvent être identiques ou différents et ont la signification indiquée dans la revendication 1, avec m égal à 2 ou à 3.

11. Liquide selon l'une ou plusieurs des revendications 1 à 10, caractérisé en ce qu'il contient un ou plusieurs colorants, en solution limpide.

12. Liquide selon l'une ou plusieurs des revendications 1 à 11, caractérisé en ce qu'il contient un ou plusieurs gélifiants.

13. Liquide selon la revendication 12, caractérisé en ce que le gélifiant est un ester d'acides organiques, un ester d'acides inorganiques avec alcools à plusieurs valences ou un ester de type carbonate d'alkylène, de préférence un carbonate d'éthylène ou de propylène.

14. Procédé pour la préparation de liquides selon l'une ou plusieurs des revendications 1 à 12, caractérisé en ce que l'on mélange un ou plusieurs silanols solubles dans l'eau, de formule générale suivante (III) :

$Y'_y$ Si $(OH)_x$ $R_{4-(x+y)}$ (III)

dans laquelle les restes Y' et R peuvent être identiques ou différents et ont la signification suivante :

R = alkyle, alcènyle, aryle, alkylaryle ou arylalkyle,

Y' = un ligand organique qui représente un alcool à plusieurs valences, un amino-alcool, un amino-thiol, un mercapto-alcool, une diamine, une triamine, un dithiol ou bien un oxirane, un thiirane ou une azirine, éventuellement substitués,

y = 1, 2 ou 3, et

x = 1, 2 ou 3, avec $x + y \leqq 4$,

éventuellement sous forme de solutions aqueuses et/ou sous forme précondensée, avec une ou plusieurs solutions aqueuses de silicate alcalin, le cas échéant avec addition d'eau et/ou avec addition d'adjuvants solubles dans l'eau et/ou de colorants solubles dans l'eau et/ou de gélifiants, pour donner un liquide transparent, plus ou moins visqueux.

**15.** Procédé selon la revendication 14, caractérisé en ce qu'il est utilisé un silanol de formule générale (III), le cas échéant sous forme précondensée, dans laquelle Y' représente du glycidoxyméthyle, du 2-glycidoxyéthyle, du 3-glycidoxypropyle, du 4-glycidoxybutyle, du glycidylméthyle, du 2-glycidyléthyle, du 3-glycidylpropyle ou du 4-glycidylbutyle.

**16.** Procédé pour la préparation de liquides selon l'une ou plusieurs des revendications 1 à 12, caractérisé en ce que l'on hydrolyse par action de l'eau ou d'humidité, le cas échéant en présence d'un catalyseur et/ou d'un solvant, des silanes de formule générale suivante (IV) :

$Y'_y \; Si \; X_x \; R_{4-(x+y)}$ (IV)

dans laquelle les restes X, Y' et R peuvent être identiques ou différents, Y', R, x et y ayant la signification indiquée dans la revendication 14 et

X = hydrogène, halogène, hydroxy, alkoxy, acyloxy, alkylcarbonyle, alkoxycarbonyle ou $NR'_2$ avec R' = hydrogène, alkyle ou aryle,

y = 1, 2 ou 3, et

x = 1, 2 ou 3 avec $x + y \leqq 4$,

en ce que les produits d'hydrolyse XH et le solvant éventuellement présent sont éliminés totalement ou en partie et en ce que les silanols résultants, éventuellement sous forme précondensée, sont mélangés avec une ou plusieurs solutions aqueuses de silicate alcalin, le cas échéant avec addition d'eau et/ou avec addition d'adjuvants solubles dans l'eau et/ou de colorants solubles dans l'eau et/ou de gélifiants, pour donner un liquide transparent, plus ou moins visqueux.

**17.** Procédé selon la revendication 16, caractérisé en ce qu'il est utilisé un silane de formule générale (IV), dans laquelle Y' représente du glycidoxyméthyle, du 2-glycidoxyéthyle, du 3-glycidoxypropyle, du 4-glycidoxybutyle, du glycidylméthyle, du 2-glycidyléthyle, du 3-glycidylpropyle ou du 4-glycidylbutyle.

**18.** Procédé selon l'une ou plusieurs des revendications 14 à 17, caractérisé en ce que la solution aqueuse de silicate alcalin utilisée est une solution technique de verre soluble.

**19.** Utilisation du liquide selon l'une ou plusieurs des revendications 1 à 13 pour la fabrication d'hydrogels transparents ou bien pour la fabrication de pièces en forme, de films ou de fibres translucides.

**20.** Utilisation du liquide selon l'une ou plusieurs des revendications 1 à 13 en tant que matériau ignifuge pour la fabrication de masses ignifuges à corps solides, pour la fabrication d'éléments de construction ignifuge, de verre de protection contre le feu ou contre le bruit, de verre feuilleté ou de verre de sécurité feuilleté, ou bien pour le revêtement de pièces préfabriquées ou d'éléments de construction.

**21.** Utilisation du liquide selon l'une ou plusieurs des revendications 1 à 13 pour la préparation de ciments résistant aux acides, de masses d'étanchéité, de matériaux isolants, de revêtements ou de systèmes de résine de coulée à deux composants.

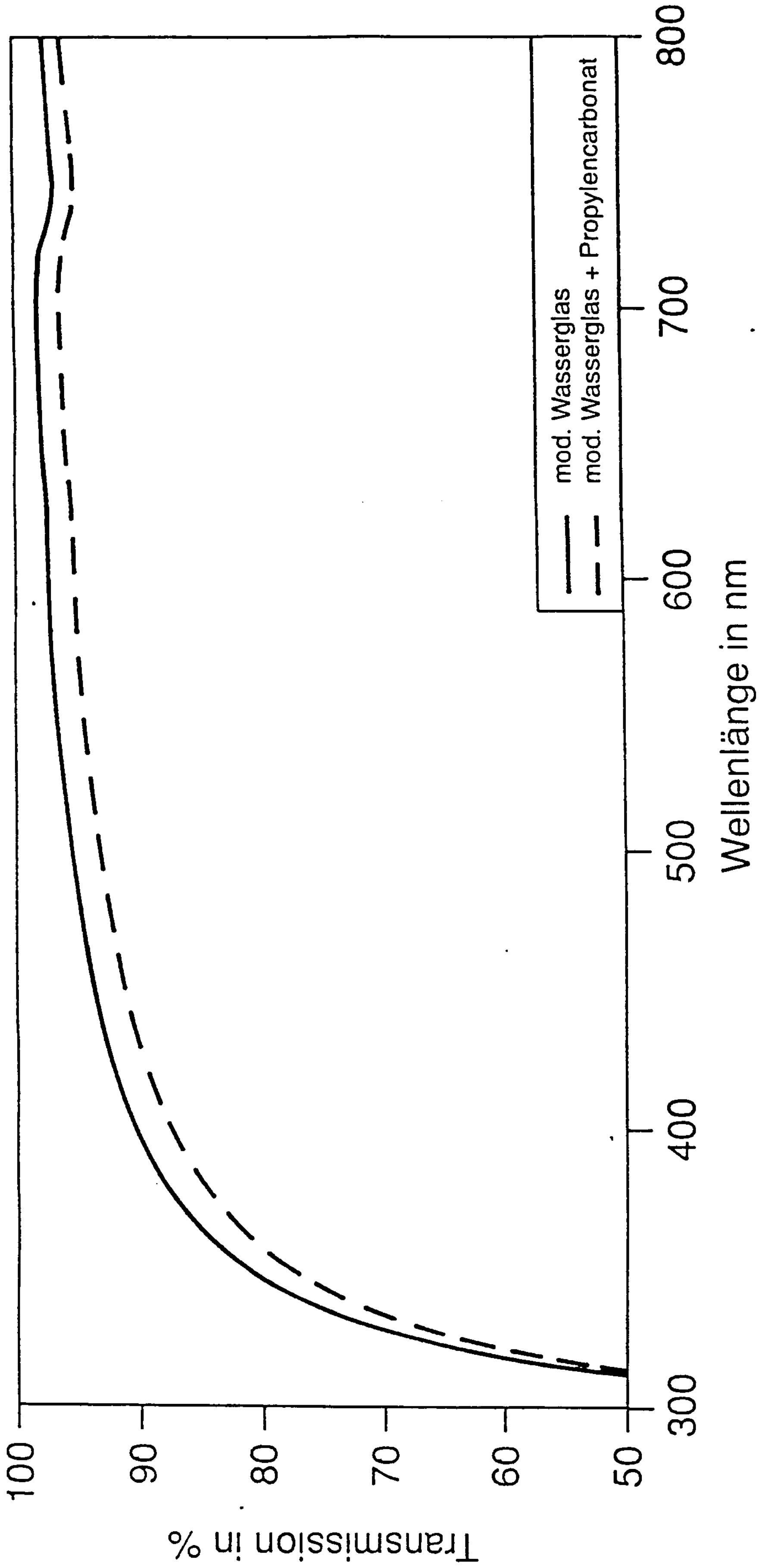
Transmission in %
100
90
80
70
60
50
300
400
500
600
700
800
Wellenlänge in nm
mod. Wasserglas
mod. Wasserglas + Propylencarbonat